Europäisches Patentamt

European Patent Office

Office européen des brevets

(19)

(11) Veröffentlichungsnummer : **0 175 672**
**B1**

(12) **EUROPÄISCHE PATENTSCHRIFT**

(45) Veröffentlichungstag der Patentschrift :
**10.02.88**

(21) Anmeldenummer : **85890131.7**

(22) Anmeldetag : **17.06.85**

(51) Int. Cl.⁴ : **B 23 Q 7/04**, B 25 J 15/08

(54) **Vorrichtung zum Handhaben von Werkstücken.**

(30) Priorität : **18.09.84 AT 2958/84**

(43) Veröffentlichungstag der Anmeldung :
**26.03.86 Patentblatt 86/13**

(45) Bekanntmachung des Hinweises auf die Patenterteilung : **10.02.88 Patentblatt 88/06**

(84) Benannte Vertragsstaaten :
**BE CH DE FR GB IT LI LU NL SE**

(56) Entgegenhaltungen :
**DE-A- 2 444 124**
**DE-A- 2 944 540**

(73) Patentinhaber : **VOEST-ALPINE Aktiengesellschaft**
**Muldenstrasse 5**
**A-4020 Linz (AT)**

(72) Erfinder : **Ganglberger, Klaus, Dipl.-Ing.**
**Werndlweg 11**
**A-4050 Traun (AT)**
Erfinder : **Rennstich, Eugen, Dipl.-Ing.**
**Fliederweg 4**
**D-7129 Güglingen 2 (DE)**

(74) Vertreter : **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher Spit-**
**telwiese 7**
**A-4020 Linz (AT)**

EP 0 175 672 B1

## Beschreibung

Die Erfindung bezieht sich auf eine Vorrichtung zum Handhaben von Werkstücken, bestehend aus einem Gehäuse und einem in dem Gehäuse drehverstellbar gelagerten Greiferkopf, der zwei zu seiner Drehachse diametral angeordnete Spanneinrichtungen mit einem Stelltrieb aufweist, der wahlweise mit einer der Spanneinrichtungen kuppelbar ist.

Vorrichtungen dieser Art sind durchaus bekannt (DE-OS 30 43 687) und dienen zum Be- und Entladen von Werkzeugmaschinen, insbesondere Drehmaschinen. Zu diesem Zweck ist der Greiferkopf mit dem Gehäuse an einem Tragarm angeordnet, der vertikal verschiebbar in einem in Richtung der Maschinenhauptachse verfahrbaren Längsschlitten gelagert ist, so daß die Werkzeugmaschine über den Greiferkopf be- und entladen werden kann. Um den Längsschlitten nicht für den Entladevorgang einerseits und für den Beladevorgang anderseits zwischen einem Werkstückspeicher und der Werkstückaufnahme der Werkzeugmaschine jeweils für sich hin- und herverfahren zu müssen, ist der Greiferkopf mit zwei Spanneinrichtungen versehen. Mit Hilfe des Greiferkopfes kann daher ein zu bearbeitendes Werkstück aus dem Werkstückspeicher entnommen und der Werkzeugmaschine zugeführt werden, wobei das fertig bearbeitete Werkstück durch die andere Spanneinrichtung aus der Werkstückaufnahme entnommen wird, bevor das zu bearbeitende Werkstück eingesetzt werden kann. Nach dem Einsetzen des zu bearbeitenden Werkstückes in die Werkstückaufnahme wird das fertig bearbeitete Werkstück in einem entsprechenden Speicher abgelegt. Hiefür ist allerdings eine zusätzliche Drehbewegung des Greiferkopfes um eine zur Maschinenhauptachse und zur Verstellrichtung des Tragarmes senkrechte Drehachse erforderlich. Diese zusätzliche Drehbewegung des Greiferkopfes gegenüber dem am Tragarm vorgesehenen Gehäuse, das neben dem Drehantrieb für den Greiferkopf den Stelltrieb für die Spanneinrichtungen aufweist, macht den Antrieb der Spanneinrichtungen schwierig, weil die Spanneinrichtungen mit dem Greiferkopf gegenüber dem Stelltrieb verdreht werden. Um wahlweise eine der Spanneinrichtungen des Greiferkopfes mit dem Stelltrieb kuppeln zu können, besteht der Stelltrieb aus wenigstens einem Hydraulikzylinder, dessen Kolben bei der Beaufschlagung in den Greiferkopf eingreift und über eine Stoßstange auf einen Betätigungshebel für die Spanneinrichtung wirkt. Da zwischen der Stoßstange und dem Kolben keine zugfeste Verbindung bestehen kann, muß die Spanneinrichtung durch eine im Spannsinn wirkende Feder beaufschlagt sein, so daß die Spanneinrichtung über den Stelltrieb nur geöffnet werden kann. Bei einer Verdrehung des Greiferkopfes gelangt die andere Spanneinrichtung mit ihrer Stoßstange in den Bereich des Hydraulikzylinders und kann in gleicher Weise geöffnet werden. Nachteilig bei dieser Konstruktion ist einerseits, daß die Spanneinrichtungen über eine Feder geschlossen werden müssen, was zu Störungen Anlaß geben kann, und daß anderseits die Spanneinrichtungen nur in einer Drehstellung betätigbar sind, wenn nicht für jede Drehstellung der Spanneinrichtungen gesonderte Hydraulikzylinder vorgesehen werden. Dazu kommt noch, daß die Hublänge der Hydraulikzylinder begrenzt ist, wodurch die möglichen Stellwege für die Spanneinrichtung ebenfalls begrenzt sind.

Der Erfindung liegt somit die Aufgabe zugrunde, diese Mängel zu vermeiden und eine Vorrichtung der eingangs geschilderten Art so zu verbessern, daß eine zwangsweise Verstellung der Spanneinrichtungen mit vergleichsweise großen Stellwegen sichergestellt wird, daß beide Spanneinrichtungen über einen gemeinsamen Stelltrieb in jeder Drehstellung des Greiferkopfes wahlweise betätigbar sind und daß eine zusätzliche Drehachse für die Handhabung der Werkstücke mit einfachen Mitteln erreicht wird.

Die Erfindung löst die gestellte Aufgabe dadurch, daß der Stelltrieb für die Spanneinrichtungen eine zur Drehachse des Greiferkopfes koaxiale Antriebswelle und zwei koaxiale, frei drehbar gelagerte Kegelräder umfaßt, die über entsprechende Gegenräder mit je einer von zwei koaxialen, beidseits der Antriebswelle im Greiferkopf gelagerten und zur Antriebswelle senkrechten Abtriebswellen für die Stellbewegung der Spanneinrichtung in Antriebsverbindung stehen, daß zwischen der Antriebswelle und den koaxialen Kegelrädern eine Schaltkupplung angeordnet ist, die aus einer Leerlaufstellung wahlweise eines der beiden Kegelräder mit der Antriebswelle kuppelt, und daß wenigstens eine der beiden Spanneinrichtungen auf einem im Greiferkopf koaxial zur Abtriebswelle drehverstellbar gelagerten Drehteller befestigt ist.

Da die beiden Spanneinrichtungen über je eine Abtriebswelle angetrieben werden, ergibt sich für die Stellbewegung der Spannwerkzeuge keine antriebsbedingte Beschränkung. Die radial geführten Spannwerkzeuge können über eine Planspiralscheibe von der Abtriebswelle verstellt werden, wobei der Verstellweg lediglich von der Spirallänge der Planspiralscheibe bzw. der in diese Planspiralscheibe eingreifenden Spiralabschnitte der die Spannwerkzeuge tragenden Stellbacken abhängt. Der Antrieb der Abtriebsstummel über die frei drehbar gelagerten Kegelräder, die über eine Schaltkupplung mit der Abtriebswelle wahlweise verbunden werden können, sichert die Verstellung der Spanneinrichtungen in jeder Drehlage des Greiferkopfes, weil die Kegelräder mit den Gegenrädern der Abtriebswellen bei einer Greiferkopfdrehung in Eingriff bleiben. Damit bei einer Verdrehung des Greiferkopfes jedoch die Spanneinrichtungen nicht zwangsläufig verstellt werden, weist die Schaltkupplung zwischen den Kegelrädern und der Antriebswelle eine Leerlaufstellung auf, so daß die Kegelräder die Drehbewegung des Greiferkopfes mitmachen können. Die fehlende Antriebsverbindung zwischen den Spanneinrichtungen und der Antriebswelle wirkt sich auf die Werkstückspannung nicht aus, weil die Planspiralscheibe eine Selbsthemmung der Stellbacken bewirkt. Je nach der Stellung der Schaltkupplung kann folglich unabhängig von der Drehstellung des Greiferkopfes wahlweise eine der beiden Spanneinrichtungen verstellt oder der Greiferkopf verdreht werden.

Der Antrieb der Spanneinrichtungen über eine zur Antriebswelle senkrechte Abtriebswelle ermöglicht es außerdem, die Spanneinrichtungen um die Achse der Abtriebswelle drehverstellbar im Greiferkopf zu lagern, indem die jeweilige Spanneinrichtung auf einem Drehteller gelagert wird. Damit ist eine zusätzliche Drehbewegung der Werkstücke möglich, so daß beispielsweise die Werkstücke zur Bearbeitung beider Enden um 180° gewendet werden können.

Bilden die Abtriebswellen den einen Teil einer Wellen-Steckkupplung deren anderer Teil aus einer Anschlußwelle der Spanneinrichtung besteht, so können die Spanneinrichtungen in einfacher Weise gegen Spanneinrichtungen mit unterschiedlichen Greifwerkzeugen ausgetauscht werden, wenn die Spanneinrichtungen austauschbare Baueinheiten darstellen. Das Austauschen von Spanneinrichtungen kann erforderlich werden, wenn Werkstücke mit unterschiedlichen Durchmesserbereichen bearbeitet oder Greifwerkzeuge für Wellen durch solche für Futterteile ersetzt werden sollen.

Da beim Anschließen einer austauschbaren Spanneinrichtung damit gerechnet werden muß, daß die Anschlußwelle, die zur Drehmomentübertragung im allgemeinen als Mehrkantwelle oder als Nutenwelle ausgebildet ist, nicht die für eine Kupplung mit einer entsprechenden Kupplungshülse erforderliche Drehstellung aufweist, ist es vorteilhaft, die Abtriebswelle hohl auszubilden und mit einem Einsatz zu versehen, der mit der. Abtriebswelle drehfest, aber gegen die Kraft einer Feder axial einschiebbar verbunden ist und eine Kupplungshülse für die Anschlußwelle bildet. Stimmen die Drehstellungen der Anschlußwelle und der Kupplungshülse nicht überein, so wird die Kupplungshülse gegen die Federkraft in die Abtriebswelle eingeschoben, ohne den Anschluß der Spanneinrichtung am Greiferkopf zu behindern. Bei einer Drehung der Abtriebswelle zum Betätigen der Spanneinrichtung wird dann die Kupplung der beiden Wellen erreicht, weil bei der Übereinstimmung der Drehstellungen die Kupplungshülse zufolge der Federkraft auf die Anschlußwelle aufgeschoben wird.

Besonders einfache Konstruktionsverhältnisse ergeben sich, wenn die Schaltkupplung zwischen der Antriebswelle und den koaxialen Kegelrädern aus einer auf der Antriebswelle drehfest, aber verschiebbar gelagerten Kupplungsmuffe besteht, die an beiden Enden einen mit entsprechenden Gegenklauen der Kegelräder zusammenwirkenden Klauenkranz aufweisen. Diese Kupplungsmuffe braucht lediglich in axialer Richtung auf der Antriebswelle nach der einen oder anderen Seite verschoben zu werden, um die Antriebsverbindung zu einer der beiden Spanneinrichtungen herzustellen. Zur Verstellung der Kupplungsmuffe kann dabei eine Stellstange vorgesehen, werden, die in der hohlen Antriebswelle verschiebbar geführt ist und an der Kupplungsmuffe angreift. Die Lagerung der Kupplungsmuffe auf der Antriebswelle und der Stellstange in der Antriebswelle bringt den Vorteil einer platzsparenden Konstruktion mit sich.

Um größere Drehmomente von der Antriebswelle auf die Kupplungsmuffe übertragen zu können, wird zwischen der Kupplungsmuffe und der Antriebswelle eine Keil-Nutverbindung vorgesehen. Diese Keil-Nutverbindung schließt jedoch· einen Durchgriff der Verbindung zwischen der Stellstange und der Kupplungsmuffe durch einen Axialschlitz der Antriebswelle aus. Nach einer weiteren Ausbildung der Erfindung ist daher vorgesehen, daß eines der beiden koaxialen Kegelräder auf der Antriebswelle gelagert ist, während das andere Kegelrad eine im Greiferkopf gelagerte Achse aufweist. Diese gesonderte Lagerung des einen Kegelrades bietet die Möglichkeit, die Stellstange axial über die Antriebswelle vorragen zu lassen, um eine Verbindung zwischen der Stellstange und der Kupplungsmuffe außerhalb der Antriebswelle sicherzustellen.

Die Drehverstellung des Drehtellers für die Spanneinrichtung darf die Verdrehung des Greiferkopfes gegenüber dem Gehäuse nicht beeinträchtigen. Aus diesem Grunde ist der im Greiferkopf drehverstellbar gelagerte Drehteller mit einem Kegelrad verbunden, das mit einem Kegelrad auf einer Hohlwelle kämmt, die drehbar auf der Antriebswelle gelagert ist. Die Hohlwelle verläuft somit koaxial zur Drehachse des Greiferkopfes, was eine Voraussetzung für einen einfachen Antrieb des Drehtellers ist.

In der Zeichnung ist der Erfindungsgegenstand beispielsweise dargestellt. Es zeigen

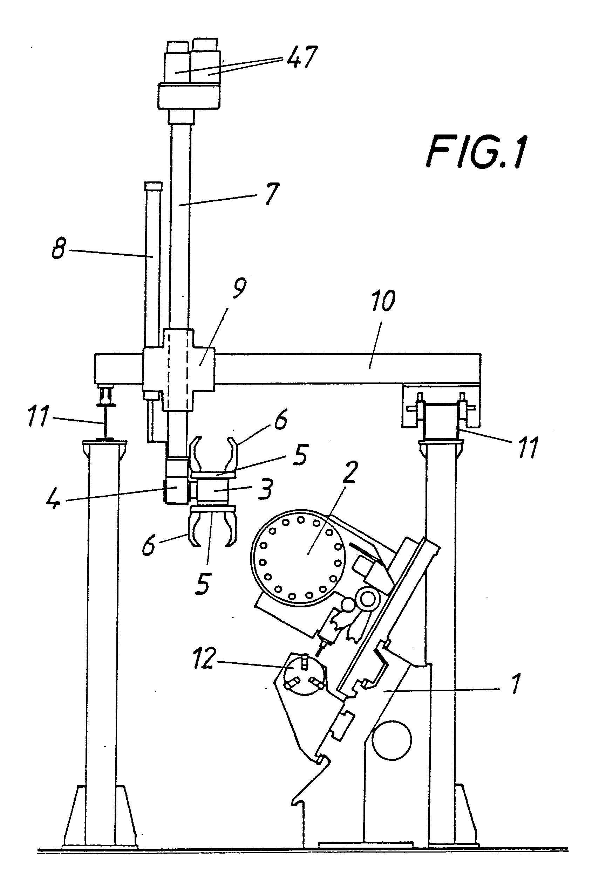

Fig. 1 eine erfindungsgemäße Vorrichtung zum Handhaben von Werkstücken in einer schematischen Stirnansicht,·

Fig. 2 das den Stelltrieb für die Spanneinrichtungen aufnehmende Gehäuse mit dem Greiferkopf in einem Axialschnitt,

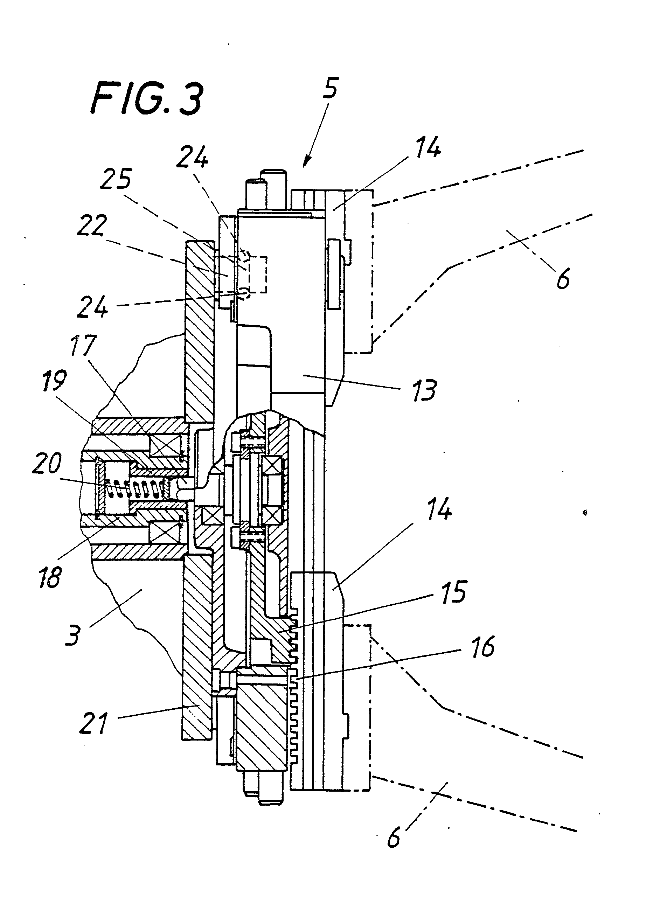

Fig. 3 eine austauschbar am Greiferkopf befestigte Spanneinrichtung in einer zum Teil aufgerissenen Seitenansicht in einem größeren Maßstab und

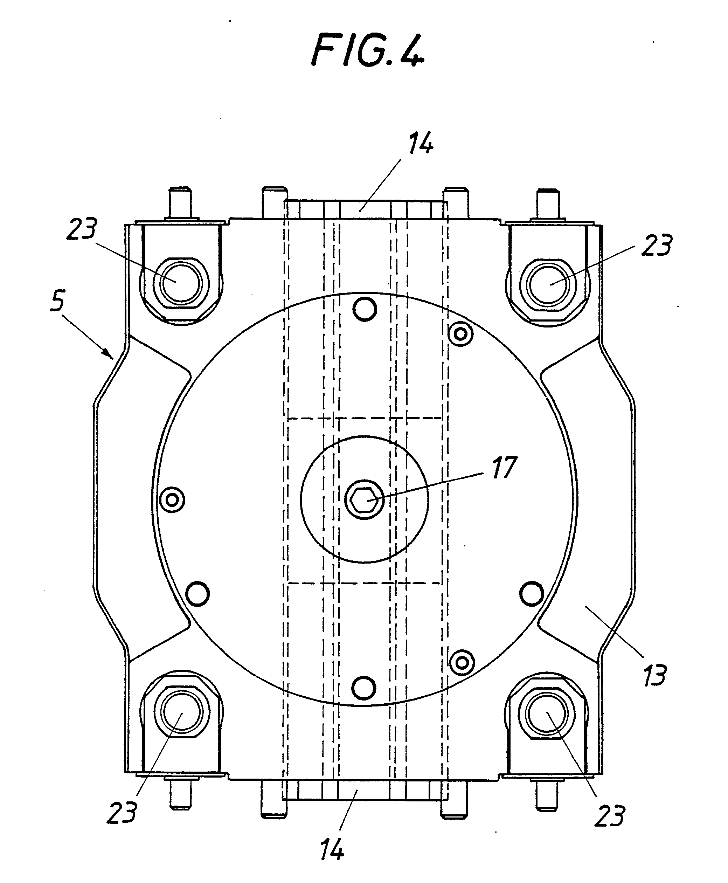

Fig. 4 eine Draufsicht auf die Unterseite der Spanneinrichtung nach Fig. 3.

Zum Be- und Entladen einer Drehmaschine 1, die mit einer Werkzeugwechselvorrichtung 2 versehen ist, ist ein Greiferkopf 3 vorgesehen, der in einem Gehäuse 4 drehbar gelagert ist und zwei gegenüber seiner Drehachse diametral angeordnete Spanneinrichtungen 5 mit Greifwerkzeugen 6 für die Werkstückhandhabung trägt. Dieses Gehäuse 4 ist an eine Tragarm 7 befestigt, der mit Hilfe eines Stellzylinders 8 vertikal verschiebbar in einem Querschlitten 9 gelagert ist. Der Querschlitten 9 ist auf einem Längsschlitten 10 verstellbar geführt, der auf Führungsbahnen 11 verfahren werden kann. Der Greiferkopf 3 kann somit in drei zueinander senkrechten Richtungen verstellt und zusätzlich um eine zur Verstellrichtung des Querschlittens 9 parallele Drehachse verdreht werden. Die Anordnung ist dabei so getroffen, daß der Längsschlitten 10 in Richtung der Hauptachse der Drehmaschine 1 verfahren werden kann. Mit Hilfe der Spanneinrichtungen 5 kann somit ein zu bearbeitendes Werkstück aus einem nicht dargestellten Speicher entnommen und dem Spannfutter 12 der Drehmaschine 1 zugeführt werden. Bevor dieses Werkstück jedoch in das Spannfutter 12 eingesetzt werden kann, muß das im Spannfutter gehaltene, bereits bearbeitete Werkstück entnommen werden. Zu diesem Zweck wird das fertige Werkstück mit der anderen Spanneinrichtung 5 erfaßt und nach dem Öffnen des Spannfutters 12 aus diesem koaxial durch ein Verfahren des Längsschlittens 10 herausgezogen. Nach einer 180°-Drehung des Greiferkopfes 3 μm seine Lagerachse kann das neu zu bearbeitende Werkstück in das Spannfutter 12 eingesetzt und das fertig bearbeitete Werkstück abgelegt werden.

Um die Greifwerkzeuge 6 über einen vergleichsweise großen Stellweg sowohl radial nach innen als auch radial nach außen verstellen zu können, sind sie auf radial in einem Gehäuse 13 verschiebbaren Stellbacken 14 angeordnet, die mit Hilfe einer drehbar im Gehäuse 13 gelagerten Planspiralscheibe 15 angetrieben werden. Diese Planspiralscheibe 15 kämmt mit entsprechenden Spiralabschnitten 16 der Stellbacken 14, so daß die Stellbacken 14 bei einer Drehung der Planspiralscheibe 15 entsprechend der Steigung der Spirale radial verstellt werden. Wegen der Selbsthemmung braucht dabei die Planspiralscheibe 15 nach der Spannbewegung der Stellbacken 14 nicht festgehalten zu werden.

Zum Antrieb der Planspiralscheibe 15 dient eine Anschlußwelle 17, die als Mehrkantwelle ausgebildet ist und mit einer Abtriebswelle 18 des Greiferkopfes 3 gekuppelt ist. Zu diesem Zweck ist die Abtriebswelle 18 hohl ausgebildet und nimmt einen Einsatz 19 drehfest, aber axial verschiebbar auf, der eine Kupplungshülse für die Anschlußwelle 17 bildet und durch eine Feder 20 abgestützt ist. Es wird folglich eine Wellen-Steckkupplung gebildet, bei der die Anschlußwelle 17 in die Abtriebswelle 18 auch dann eingeführt werden kann, wenn die Drehstellung des Einsatzes 19 nicht mit der Drehstellung der Anschlußwelle 17 übereinstimmt. Wird die Abtriebswelle angetrieben, so wird der Einsatz 19 gegenüber der Anschlußwelle 17 verdreht, bis die Drehlagen einander entsprechen und der Einsatz 19 durch die Feder 20 auf die Anschlußwelle 17 geschoben wird, wodurch die formschlüssige Antriebsverbindung hergestellt ist. Die Spanneinrichtungen 5 können daher in vorteilhafter Weise austauschbar an den Greiferkopf 3 angeschlossen werden. Hiefür ist jeweils ein Anschlußflansch 21 vorgesehen, der Kupplungsbolzen 22 trägt, die in entsprechende Aufnahmeöffnungen 23 auf der Unterseite der Spanneinrichtungen eingreifen. Die Spanneinrichtungen 5 sind mit Verriegelungseinrichtungen versehen, die die Kupplungsbolzen 22 in den Aufnahmeöffnungen 23 festhalten. Diese Verriegelungseinrichtungen weisen gegen eine Schließfeder entriegelbare Verschlußstücke auf, die in der Verriegelungsstellung Kugeln 24 im Eingriff mit einer Ringnut 25 der Kupplungsbolzen 22 halten.

Um die beiden Spanneinrichtungen 5 des Greiferkopfes 3 antreiben zu können, ist eine zur Drehachse des Greiferkopfes 3 koaxiale Antriebswelle 26 vorgesehen, die mit Hilfe einer Schaltkupplung 27 wahlweise mit einem von zwei frei drehbar gelagerten Kegelrädern 28, 29 verbunden werden kann. Diese Kegelräder 28, 29 kämmen jeweils mit einem den Abtriebswellen 18 zugeordneten Gegenrad 30 bzw. 31. Je nach der Schaltstellung der Schaltkupplung 27 wird somit keine der beiden Spanneinrichtungen 5 oder wahlweise eine davon über die Antriebswelle 26 angetrieben.

Die Schaltkupplung 27 besteht nach dem Ausführungsbeispiel aus einer Kupplungsmuffe 32, die über eine Keil-Nutverbindung drehfest, aber axial verschiebbar auf der Antriebswelle 26 gelagert ist und mit Gegenklauen auf den Kegelrädern 28, 29 zusammenwirkende Klauenkränze aufweist. Zum Schalten dieser Schaltkupplung 27 ist eine über einen Antrieb 33 verstellbare Stellstange 34 vorgesehen, die durch die hohl ausgebildete Antriebswelle 26 geführt ist und aus der Antriebswelle 26 vorragt, um außerhalb der Antriebswelle mit der Kupplungsmuffe 32 verbunden zu werden. Diese Konstruktion bedingt allerdings, daß das Kegelrad 29 auf einer gesonderten, zur Antriebswelle 26 koaxialen Achse 35 im Greiferkopf 3 gelagert ist.

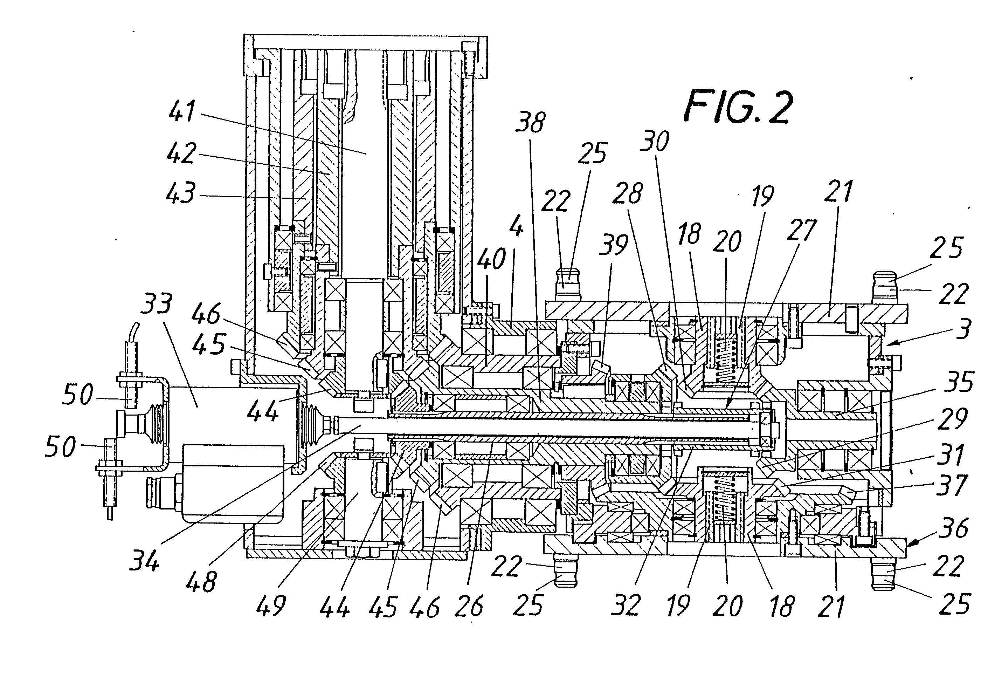

Der Antrieb der Spanneinrichtungen 5 über die Abtriebswellen 18, die zueinander koaxial ausgerichtet sind und senkrecht zur Antriebswelle 26 verlaufen, bietet die einfache Möglichkeit, zumindest einen der beiden Anschlußflansche 21 als Drehteller 36 auszubilden und im Greiferkopf 3 drehbar zu lagern, so daß eine zusätzliche Drehachse für die Handhabung der Werkstücke erhalten wird. Diese zusätzliche Drehachse erlaubt es beispielsweise, ein Werkstück an beiden Enden bearbeiten zu können, ohne den Tragarm 7 der Höhe nach verstellen zu müssen. Zur Drehverstellung des Drehtellers 36 ist dieser mit einem Kegelrad 37 verbunden, das mit einem auf einer Hohlwelle 38 sitzenden Kegelrad 39 kammt. Diese Hohlwelle 38 ist drehbar auf der Antriebswelle 26 gelagert und trägt das Kegelrad 28 zum Antrieb der einen Spanneinrichtung 5. Die Drehbewegung des Greiferkopfes 3 μm die Antriebswelle 26 erfolgt ebenfalls über eine Hohlwelle 40, die jedoch drehfest mit dem Greiferkopf 3 verbunden ist. Über die Antriebswelle 26 und die beiden Hohlwellen 38 und 40 können folglich der Greiferkopf 3 und die Spanneinrichtungen 5 in allen Bewegungen verstellt werden. Der Antrieb der Antriebswelle 26 und der Hohlwellen 38 und 40 erfolgt gemäß Fig. 2 über koaxiale ineinander gelagerte Wellen 41, 42, 43 von Antriebsmotoren 47 auf dem Tragarm 7 her, wobei die Wellen 41, 42, 43 mit den Wellen 26, 38, 40 über Kegelradpaare 44, 45, 46 antriebsverbunden sind. Die Antriebswelle 26 kann dabei zusätzlich von Hand aus über ein Kegelrad 48 auf einer Welle 49 angetrieben werden, die mit Hilfe einer Kurbel verdreht werden kann.

Die Stellung der Schaltstange 34 kann über zwei Fühler 50 überwacht werden, die am Antrieb 33 vorgesehen sind.

Soll nach dem Anschluß entsprechender Spanneinrichtungen 5 an den Anschlußflanschen 21 ein zu bearbeitendes Werkstück ergriffen werden, so wird die Hohlwelle 41 über den zugehörigen Antriebsmotor 47 angetrieben und die Schaltkupplung 27 uber den Antrieb 33 aus der Leerlaufstellung heraus so verstellt, daß das der jeweiligen Spanneinrichtung 5 zugeordnete Kegelrad 28 oder 29 mit der Antriebswelle 26 verbunden wird. Über diese Antriebsverbindung können dann die Stellbacken 14 der Spanneinrichtung betätigt und das zu bearbeitende Werkstück erfaßt werden. Das im Spannfutter 12 der Drehmaschine 1 gehaltene, bereits fertig bearbeitete Werkstück muß vor dem Einsetzen des neuen Werkstückes aus dem Spannfutter 12 entnommen werden, was mit der anderen Spanneinrichtung 5 durchgeführt wird. Zu diesem Zweck muß die Schaltkupplung 27 über den Antrieb 33 verstellt und das andere Kegelrad 29 bzw. 28 angetrieben werden, um das fertige Werkstück mit Hilfe der Greifwerkzeuge 6 aus dem Spannfutter 12 entnehmen zu können. Das neue Werkstück wird dann nach einer 180°-Drehung des Greiferkopfes 3 in das Spannfutter 12 über entsprechende Schlittenbewegungen eingefuhrt. Die Drehung des Greiferkopfes 3 gegenüber dem Gehäuse 4 erfolgt über die Hohlwelle 43, das Kegelradpaar 46 und die Hohlwelle 40. Damit bei der Drehung des Greiferkopfes um die Antriebswelle 26 jedoch keiner der beiden Spanneinrichtungen verstellt wird, muß die Schaltkupplung 27 in die Leerlaufstellung gebracht werden.

Soll das an einem Ende bearbeitete Werkstück auch an seinem anderen Ende bearbeitet werden, so wird es von der auf dem Drehteller 36 angeordneten Spanneinrichtung 5 erfaßt, die mit dem Drehteller 36 über die Kegelräder 37 und 39 von der Hohlwelle 38 her verdreht werden kann. Der Antrieb der Hohlwelle 38 erfolgt dabei über einen gesonderten Antriebsmotor 47, der mit der Hohlwelle 42 in Antriebsverbindung steht.

Obwohl sich durch den Antrieb von den Wellen 41, 42 und 43 her eine vorteilhafte Konstruktion ergibt, braucht der Antrieb nicht durch den Tragarm 7 hindurch zu erfolgen. Es wäre durchaus möglich, die Antriebe an das Gehäuse 4 anzusetzen, falls für diese Antriebe ausreichend Platz vorhanden ist.

**Patentansprüche**

1. Vorrichtung zum Handhaben von Werkstücken, bestehend aus einem Gehäuse (4) und einem in dem Gehäuse (4) drehverstellbar gelagerten Greiferkopf (3), der zwei zu seiner Drehachse diametral angeordnete Spanneinrichtungen (5) mit einem Stelltrieb aufweist, der wahlweise mit einer der Spanneinrichtungen (5) kuppelbar ist, dadurch gekennzeichnet, daß der Stelltrieb für die Spanneinrichtungen (5) eine zur Drehachse des Greiferkopfes (3) koaxiale Antriebswelle (26) und zwei koaxiale, frei drehbar gelagerte Kegelräder (28, 29) umfaßt, die über entsprechende Gegenräder (30, 31) mit je einer von zwei koaxialen, beidseits der Antriebswelle (26) im Greiferkopf (3) gelagerten und zur Antriebswelle (26) senkrechten Abtriebswellen (18) für die Stellbewegung der Spanneinrichtungen (5) in Antriebsverbindung stehen, daß zwischen der Antriebswelle (26) und den koaxialen Kegelrädern (28, 29) eine Schaltkupplung (27) angeordnet ist, die aus einer Leerlaufstellung wahlweise eines der beiden Kegelräder (28, 29) mit der Antriebswelle (26) kuppelt, und daß wenigstens eine der beiden Spanneinrichtungen (5) auf einem im Greiferkopf (3) koaxial zur Abtriebswelle (18) drehverstellbar gelagerten Drehteller (36) befestigt ist.

2. Vorrichtung nach Anspruch 1, dadurch gekennzeichnet, daß die Abtriebswellen (18) den einen Teil einer Wellensteckkupplung bilden, deren anderer Teil aus einer Anschlußwelle (17) der Spanneinrichtung (5) besteht, und daß die Spanneinrichtungen (5) austauschbar am Greiferkopf (3) befestigte Baueinheiten darstellen.

3. Vorrichtung nach Anspruch 2, dadurch gekennzeichnet, daß die Abtriebswellen (18) hohl ausgebildet sind und einen Einsatz (19) aufweisen, der mit der Abtriebswelle (18) drehfest, aber gegen die Kraft einer Feder (20) axial einschiebbar verbunden ist und eine Kupplungshülse für die Anschlußwelle (17) bildet.

4. Vorrichtung nach einem der Ansprüche 1 bis 3, dadurch gekennzeichnet, daß die Schaltkupplung (27) zwischen der Antriebswelle (26) und den koaxialen Kegelrädern (28, 29) aus einer auf der Antriebswelle (26) drehfest, aber verschiebbar gelagerten Kupplungsmuffe (32) besteht, die an beiden Enden einen mit entsprechenden Gegenklauen der Kegelräder (28, 29) zusammenwirkenden Klauenkranz aufweist.

5. Vorrichtung nach Anspruch 4, dadurch gekennzeichnet, daß die Kupplungsmuffe (32) mit einer Stellstange (34) verbunden ist, die in der hohlen Antriebswelle (26) verschiebbar geführt ist.

6. Vorrichtung nach einem der Ansprüche 1 bis 5, dadurch gekennzeichnet, daß eines der beiden koaxialen Kegelräder (28, 29) auf der Antriebswelle (26) gelagert ist, während das andere Kegelrad (29) eine im Greiferkopf (3) gelagerte Achse (35) aufweist.

7. Vorrichtung nach einem der Ansprüche 1 bis 6, dadurch gekennzeichnet, daß der im Greiferkopf (3) drehverstellbar gelagerte Drehteller (36) mit einem Kegelrad (37) verbunden ist, das mit einem Kegelrad (39) auf einer Hohlwelle (38) kämmt, die drehbar auf der Antriebswelle (26) gelagert ist.

### Claims

1. Apparatus for handling workpieces, comprising a housing (4) and a gripper head (3), which is mounted in the housing (4) for a rotary adjustment and comprises two grippers (5), which are diametrically disposed with respect to the axis of rotation of the gripper head and are provided with a positioning drive, which is adapted to be selectively coupled to either of the grippers (5), characterized in that the positioning drive for the grippers (5) comprises an input shaft (26), which is coaxial to the axis of rotation of the gripper head (3), and two freely rotatably mounted, coaxial bevel wheels (28, 29), which via two mating wheels (30, 31) are operatively connected to an associated one of two coaxial output shafts (18), which are mounted in the gripper head (3) on opposite sides of the input shaft (26) and are at right angles to the input shaft and impart the positioning movement to the grippers (5), a clutch (27) is provided between the input shaft (26) and the coaxial bevel wheels (28, 29), and from a neutral position selectively couples either of the two bevel wheels (28, 29) to the drive shaft (26), and at least one of the two grippers (5) is secured to a rotary disc (36), which is mounted in the gripper head (3) for a rotary adjustment and is coaxial to the output shaft (18).

2. Apparatus according to claim 1, characterized in that the output shafts (18) constitute one part of a shaft plug coupling, the other part of that coupling consists of a connecting shaft (17) of the gripper (5) and the grippers (5) constitute units which are replaceably secured to the gripper head (3).

3. Apparatus according to claim 2, characterized in that the output shafts (18) are hollow and comprise an insert (19), which is non-rotatably connected to the output shaft (18) but is axially insertable against the force of a spring (29) and constitutes a coupling sleeve for the connecting shaft (17).

4. Apparatus according to any of claims 1 to 3, characterized in that the clutch (27) between the input shaft (26) and the coaxial bevel wheels (28, 29) consists of a coupling sleeve (32), which is non-rotatably and slidably mounted on the input shaft and is provided at either end with an annular series of claws, which cooperate with mating claws of the bevel wheels (28, 29).

5. Apparatus according to claim 4, characterized in that the coupling sleeve (32) is connected to an actuating rod (34), which is slidably guided in the hollow input shaft (26).

6. Apparatus according to any of claims 1 to 5, characterized in that one of the two coaxial bevel wheels (28, 29) is movably mounted on the input shaft (26) and the other bevel wheel (29) has an axle (35) which is movably mounted in the gripper head (3).

7. Apparatus according to any of claims 1 to 6, characterized in that the turntable (36) which is mounted in the gripper head (3) for a rotary adjustment is connected to a bevel wheel (37), which meshes with a bevel wheel (39) on a hollow shaft (38), which is rotatably mounted on the input shaft (26).

### Revendications

1. Dispositif pour manutentionner des pièces d'usinage, se composant d'un boîtier et d'une tête à pinces qui, montée de manière à pouvoir être positionnée en rotation dans le boîtier, présente deux dispositifs de serrage disposés diamétralement dans son axe de rotation avec un mécanisme de commande qui peut être accouplé au choix avec l'un des dispositifs de serrage, caractérisé par le fait que le mécanisme de commande pour les dispositifs (5) de serrage comprend un arbre d'entraînement (26) coaxial à l'axe de rotation de la tête (3) à pinces et deux roues coniques (28, 29) coaxiales qui, montées folles dans leur mouvement de rotation, se trouvent en liaison cinématique d'entraînement, par l'intermédiaire de roues antagonistes (30, 31) correspondantes, chacune avec l'un de deux arbres menés (18) coaxiaux, montés des deux côtés de l'arbre d'entraînement (26) dans la tête (3) à pinces et perpendiculaires à cet arbre d'entraînement (26) pour transmettre le mouvement de réglage aux dispositifs (5) de serrage, qu'entre l'arbre d'entraînement (26) et les roues coniques (28, 29) coaxiales est disposé un embrayage (27) commandé qui couple, à partir d'une position de point mort ou de marche à vide, au choix l'une des deux roues coniques (28, 29) à l'arbre d'entraînement (26), et qu'au moins l'un des deux dispositifs (5) de serrage est fixé sur un plateau rotatif (36) monté dans la tête (3) à pinces d'une manière à pouvoir être positionné en rotation coaxialement à l'arbre mené (18).

2. Dispositif selon la revendication 1, caractérisé par le fait que les deux arbres menés (18) forment l'une des parties d'un accouplement d'arbre par emboîtement dont l'autre partie se compose d'un arbre de jonction (17) du dispositif (5) de serrage, et que les dispositifs (5) de serrage représentent des unités de construction fixées de manière interchangeable à la tête (3) à pinces.

3. Dispositif selon la revendication 2, caractérisé par le fait que les arbres menés (18) sont réalisés comme arbres creux et présentent une garniture (19) qui, reliée à l'arbre mené (18) d'une manière interdisant ses mouvements relatifs de rotation, mais permettant son enfoncement dans le sens axial en surmontant la force d'un ressort (20), forme une douille de couplage pour l'arbre de jonction (17).

4. Dispositif selon les revendications 1 à 3, caractérisé par le fait que l'embrayage (27) commandé entre l'arbre d'entraînement (26) et les roues coniques (28, 29) coaxiales se compose d'un manchon (32) de couplage qui, monté de manière interdisant sa rotation, mais permettant son coulissement sur l'arbre d'entraînement (26), présente aux deux extrémités une couronne à griffes coopérant avec des griffes antagonistes des roues coniques (28, 29).

5. Dispositif selon la revendication 4, caractérisé par le fait que le manchon (32) de couplage est relié à une barre (34) de manœuvre, qui est guidée de manière coulissante dans l'arbre creux (26) d'entraînement.

6. Dispositif selon les revendications 1 à 5, caractérisé par le fait que l'une des deux roues coniques (28, 29) coaxiales est montée sur l'arbre d'entraînement (26), tandis que l'autre roue conique (29) présente un axe (35) monté dans la tête (3) à pinces.

7. Dispositif selon les revendications 1 à 6, caractérisé par le fait que le plateau rotatif (36) monté dans la tête (3) à pinces d'une manière autorisant son positionnement en rotation, est relié à une roue conique (37) qui engrène dans une roue conique (39) sur un arbre (38) creux qui est monté de manière à pouvoir tourner sur l'arbre d'entraînement (26).

FIG.1

FIG.2

FIG.3

# FIG.4